# EUROPÄISCHE PATENTSCHRIFT

(11) **EP 0 431 686 B1**
(45) Veröffentlichungstag und Bekanntmachung des Hinweises auf die Patenterteilung: **27.07.1994**
(21) Anmeldenummer: 90203159.0
(22) Anmeldetag: 30.11.1990
(51) Int. Cl.: G01J 1/44, G01T 1/24, H04N 5/335

(54) **Anordung zum Auslesen licht- oder röntgenstrahlenempfindlicher Sensoren**
Arrangement for reading photo or X-ray detectors
Arrangement pour lire des détecteurs sensibles à la lumière ou aux rayons X

(30) Priorität: 05.12.1989 DE 3940164
(43) Veröffentlichungstag der Anmeldung: 12.06.1991
(73) Patentinhaber: Philips Patentverwaltung GmbH, 22335 Hamburg (DE); Philips Electronics N.V., 5621 BA Eindhoven (NL)
(72) Erfinder: Conrads, Norbert, B-4729 Hauset (BE); Schiebel, Ulrich, Dr., W-5100 Aachen (DE); Wieczorek, Herfried, Dr., W-5100 Aachen (DE)
(74) Vertreter: von Laue, Hanns-Ulrich, Dipl.-Ing.

(56) Entgegenhaltungen:
- WO-A-88/08989
- DE-A- 2 504 590
- DE-A- 3 001 131
- DE-A- 3 004 146
- DE-A- 3 306 163
- DE-A- 3 531 448
- FR-A- 2 593 319

## Beschreibung

Die Erfindung betrifft eine Anordnung nach dem Oberbegriff des Anspruchs 1. Bei derartigen Anordnungen zum Auslesen licht- oder röntgenstrahlenempfindlicher Sensoren besteht das Problem, daß nach dem Einschalten der Spannung die Schaltdiode insbesondere dann nicht ausreichend leitend wird, wenn die Kapazität der Photodiode durch das Sensorelement nur relativ gering aufgeladen wurde. Ein sicheres Auslesen der in der Kapazität der Photodiode gespeicherten Ladung ist also nur bei relativ großen Ladungsmengen möglich. Insbesondere für den Anwendungsbereich der Röntgentechnik sind die Ladungsmengen jedoch relativ gering, so daß beispielsweise in diesem Anwendungsbereich eine solche Anordnung nicht einsetzbar ist.

Ferner ist es, beispielsweise aus der DE-A-35 31 448, bekannt, zum Auslesen derartiger strahlenempfindlicher Sensoren anstelle einer Schaltdiode Feldeffekttransistoren in Dünnfilmtechnik vorzusehen. Derartige Feldeffekttransistoren erzeugen aber aufgrund parasitärer Kapazitäten einen störenden Offset beim Auslesen. Ferner wird zur Ansteuerung des Gates jedes Feldeffekttransistors eine weitere Leitung benötigt, so daß die Ausbeute bei der Produktion verringert wird.

Es ist Aufgabe der Erfindung, eine Anordnung der eingangs genannten Art zu schaffen, welche mit möglichst geringem schaltungstechnischen Aufwand auch das Auslesen geringer, in der Kapazität gespeicherter Ladungsmengen gestattet. Diese Aufgabe wird durch die im Anspruch 1 angegebenen Maßnahmen gelöst.

Das zusätzlich eingekoppelte Signal gestattet auch ein Auslesen relativ kleiner, in der Kapazität gespeicherter Ladungsmengen, ohne zusätzliche Bauelemente für den Auslesevorgang zu benötigen. Infolge des zusätzlich eingekoppelten Signals wird während des Auslesens eine größere Ladungsmenge abfließen, als dies ohne das eingekoppelte Signal der Fall wäre. Es ist daher beim Messen der während des Auslesevorganges abgeflossenen Ladungsmenge zu berücksichtigen, daß ein Teil der Ladungsmenge auf das zusätzlich eingekoppelte Signal zurückzuführen ist. Diese Ladungsmenge ist dann rechnerisch von der insgesamt gemessenen Ladungsmenge abzuziehen. Im Ergebnis bleibt dann diejenige Ladungsmenge übrig, welche auf eine Aufladung der Kapazität mittels des Sensorelementes zurückgeht.

Ein weiterer Vorteil dieser Anordnung besteht darin, daß die Photodiode und die Schaltdiode in den selben Arbeitsgängen herstellbar sind.

Nach einer Ausgestaltung der Erfindung ist vorgesehen, daß als zusätzlich eingekoppeltes Signal ein konstanter Gleichstrom vorgesehen ist, welcher in Sperrichtung der Photodiode fließt. Ein solcher Gleichstrom führt dazu, daß die Schaltdiode in ihrer Kennlinie bereits vor Beginn des Auslesevorgangs stärker in ihren leitenden Bereich überführt wird. Nach dem Einschalten der Spannung ist die Diode nun auch bei geringen in der Kapazität gespeicherten Ladungsmengen stärker leitend, so daß auch kleine Ladungsmengen aus der Kapazität ausgelesen werden können. Bei der ausgelesenen Ladungsmenge ist wiederum zu berücksichtigen, daß infolge des Gleichstromes die Kapazität zusätzlich aufgeladen wurde, so daß dieser Ladungswert zur Bestimmung desjenigen Ladungswertes, der auf das Sensorelement zugeht, zu subtrahieren ist.

Nach einer weiteren Ausgestaltung ist vorgesehen, daß das zusätzlich eingekoppelte Signal mittels einer konstanten Zusatzbestrahlung des Sensorelementes erzeugt wird. In diesem Fall wird also mittels des Sensorelementes eine auf die Zusatzbestahlung zurückgehende Ladungsmenge erzeugt. Zusätzlich wird diejenige Ladungsmenge erzeugt, welche auf die zu messende Licht- oder Röntgenstrahlung zurückgeht. Beim Auslesevorgang der Ladungsmenge aus der Kapazität ist dabei wieder diejenige Ladungsmenge zu subtrahieren, welche auf die Zusatzbestrahlung zurückgeht.

Nach einer weiteren Ausgestaltung der Erfindung ist vorgesehen, daß zwischen zwei Auslesezyklen der ersten Schaltdiode eine weitere Spannung eingekoppelt und anschließend abgeschaltet wird, welche in Relation zu der für den Auslesevorgang der ersten Schaltdiode vorgesehenen Spannung umgekehrte Polarität aufweist und welche eine zweite Schaltdiode (8), die zur ersten Schaltdiode antiparallel geschaltet ist, vorübergehend in ihren leitenden Zustand überführt.

Um die Schaltdiode bei Einschalten der Spannung in einen stärker leitenden Zustand zu überführen, als dies ohne zusätzlich eingekoppeltes Signal der Fall wäre, ist es vorteilhaft, eine weitere Schaltdiode vorzusehen, welche zu der ersten Schaltdiode antiparallel geschaltet ist. Zwischen zwei Auslesevorgängen der ersten Schaltdiode wird dann mittels einer weiteren Spannung die zweite Schaltdiode kurzfristig in ihren leitenden Zustand überführt. Nach Abschalten dieser Spannung ist dann in der Kennlinie der ersten Schaltdiode, welche nach wie vor zum Auslesen der Ladung der Kapazität eingesetzt wird, bereits ein solcher Zustand erreicht, in dem dann das Einschalten der dieser Diode zugeordneten Spannung ausreicht, diese auch bei geringen, in der Kapazität gespeicherten Ladungsmengen sicher in ihren leitenden Zustand zu überführen. Die zweite Schaltdiode und die ihr zugeordnete Spannung dienen also dazu, die erste Diode bei Einschalten der ihr zugeordneten Spannung in einen stärker leitenden Zustand zu überführen, als dies ohne die zweite Schaltdiode und den ihr zugeordneten Potentialsprung der Fall wäre. In jedem Falle gilt, daß vor dem Einkoppeln einer der Spannungen die andere zuvor ausgeschaltet sein muß.

Auch in diesem Fall ist zu berücksichtigen, daß die beiden Spannungen eine zusätzliche Ladungsmenge auf der Kapazität zur Folge haben, welche nicht auf die Belichtung des Sensorelementes zurückgeht. Daher ist zur Bestimmung der von dem Sensorelement erzeugten Ladungsmenge nach einer weiteren Ausgestaltung der Erfindung vorgesehen, daß die Spannungen verschiedener Polarität die gleiche Größe aufweisen und daß zur Ermittlung jedes Meßwertes der Strahlungsmenge die über die erste und über die zweite Schaltdiode nach Anlegung der jeweils zugeordneten Spannung abfließenden Ladungsmengen aufintegriert werden.

Es werden also diejenigen Ladungsmengen aufintegriert, welche nach dem Einschalten der ersten Spannung (und dem Ausschalten dieser Spannung) bis zum Einschalten der zweiten Spannung und welche nach dem Einschalten der zweiten Spannung (und dem Ausschalten dieser Spannung) bis zum Einschalten der ersten Spannung fließen. Die in diesen Phasen fließenden Ladungsmengen sind annähernd gleich groß und rauscharm. Die auf die Spannungssprünge zurückgehenden Ladungsmengen heben sich durch die Integration auf und als Meßsignal verbleibt diejenige Ladungsmenge, welche auf die zu messenden Licht- oder Röntgenstrahlen zurückgeht. Von dem so erzeugten Meßsignal braucht daher kein konstanter Wert abgezogen zu werden.

Nach einer weiteren Ausgestaltung der Erfindung ist vorgesehen, daß zur Ermittlung jedes Meßwertes der Strahlungsmenge nur genau eine Spannung eingekoppelt und anschließend abgeschaltet wird, daß nur die über die in Folge dieser Spannung in ihren leitenden Zustand überführte Schaltdiode abfließende Ladungsmenge gemessen wird und daß zur Ermittlung des nächsten Meßwertes eine Spannung umgekehrter Polarität eingekoppelt und anschließend abgeschaltet wird. Es werden bei dieser Variante also die nach Anlegen einer der Spannungen abfließenden Ladungen einzeln ausgewertet, so daß für jeden Meßwert nur eine Spannung vorübergehend einzukoppeln ist. Die nach dem Einschalten derjenigen Spannung, welche die zweite Schaltdiode in ihren leitenden Zustand überführt, abfließende Ladungsmenge wird dann auch zur Bestimmung der Strahlungsmenge und damit der durch diese in der Kapazität erzeugten Ladung herangezogen. Es ist dabei jedoch zu berücksichtigen, daß in diesem Falle die durch die zweite Schaltdiode abfließende Ladungsmenge durch eine von der Kapazität mittels des Sensorelementes aufgebrachte Ladungsmenge verringert wird. D.h. also, die in dieser Phase ausgelesene Ladungsmenge ist umso kleiner, je größer die durch Belichtung erzeugte Ladungsmenge ist. Der Vorteil dieser Variante liegt darin, daß zwischen zwei Auslesevorgängen kein zusätzlicher Rücksetzvorgang erforderlich ist. Vielmehr wird jeder Spannungssprung bzw. die danach fließenden Ströme direkt zur Messung des gewünschten Signals eingesetzt.

Im Normalfall sind die Kapazitätswerte, die die Photodiode selbst aufweist, ausreichend. Sollte dies in besonderen Fällen nicht so sein, ist nach einer weiteren Ausgestaltung der Erfindung vorgesehen, daß zur photodiode eine zusätzliche Kapazität parallelgeschaltet ist.

Anhand der Zeichnung werden einige Ausführungsbeispiele der Erfindung näher erläutert. Es zeigen:
Fig. 1 eine erste Ausführungsform eines licht- oder röntgenstrahlenempfindlichen Sensors mit einer Ausleseanordnung, welche eine Schaltdiode aufweist,
Fig. 2 eine Kennlinie der Ausleseanordnung gemäß Fig. 1,
Fig. 3 eine zweite Anordnung eines Sensors mit einer Ausleseanordnung, welche zwei antiparallel geschaltete Schaltdioden aufweist, und
Fig. 4 eine Kennlinie der Ausleseanordnung gemäß Fig. 4.

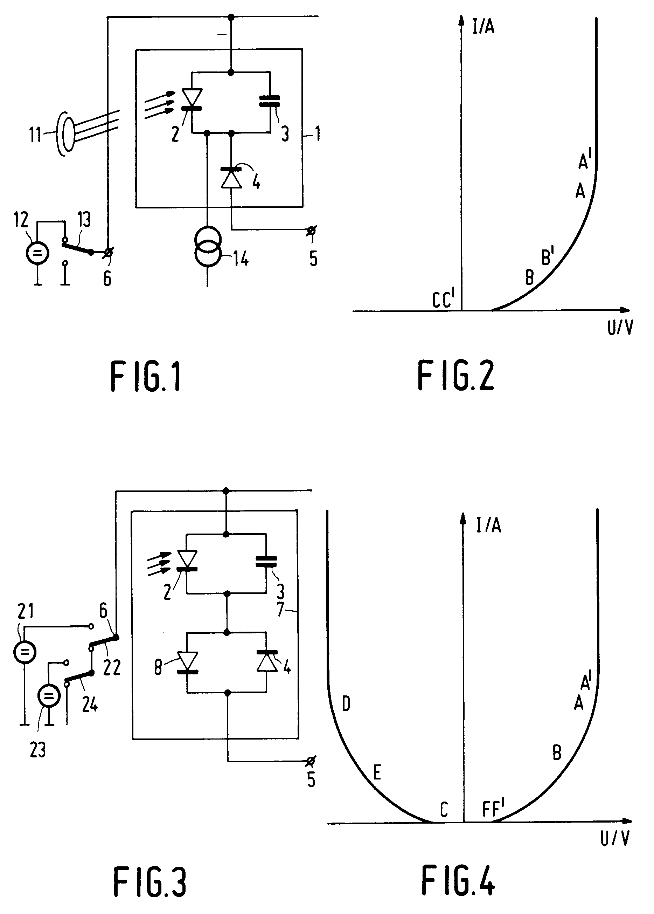

In Fig. 1 ist ein licht- oder röntgenstrahlenempfindlicher Sensor 1 dargestellt, welcher ein strahlungsempfindliches Sensorelement 2 aufweist, bei dem es sich um eine Photodiode handelt. Die Photodiode 2 weist selbst eine Kapazität auf, welche in der Fig. 1 zur Verdeutlichung als gesonderte Kapazität 3 dargestellt ist. Eine Schaltdiode 4 ist mit ihrer Kathode mit der Kathode der Fotodiode 2 sowie mit der Kapazität 3 verbunden. Zur Anode der Schaltdiode 4 führt eine Signalleitung mit einem externen Anschluß 5. Die anodenseitige Verbindung der Fotodiode 2 und der Kapazität 3 ist mit einer Signalleitung verbunden, welche einen Anschluß 6 aufweist.

Die Funktionsweise des in Fig. 1 dargestellten Sensors wird im folgenden mittels einer in Fig. 2 dargestellten Kennlinie der Schaltdiode 4 gemäß Fig. 1 erläutert.

Um die in der Kapazität 3 gespeicherte Ladung auslesen zu können, wird die Spannung über der Schaltdiode 4 dadurch geändert, daß entweder über die Signalleitung 6 oder die Ausleseleitung 5 ein Potentialsprung, d.h. also eine zusätzliche oder veränderte Spannung, eingekoppelt wird, welche dazu führt, daß die Diode in ihren leitenden Zustand überführt wird, der in der Kennlinie gemäß Fig. 2 mit A bezeichnet ist. Da die Diode nunmehr leitet, wird während des Auslesens infolge der abfließenden Ladung die Spannung über die Diode allmählich abfallen, so daß diese allmählich den Strom sperrt. Es ist nunmehr der Punkt B in der Kennlinie erreicht. Um den Auslesevorgang zu beenden, wird die eingekoppelte Spannung abgeschaltet. Die Diode 4 sperrt nunmehr; es ist in der Kennlinie der Punkt C erreicht. Infolge auf das Sensorelement 2 auftreffender Strahlung erzeugt dieses einen Strom, welcher wiederum dazu führt, daß die Kapazität 3 aufgeladen wird. In der Kennlinie gemäß Fig. 2 ist nunmehr der Punkt C' erreicht. Zum Auslesen dieser Ladung wird die Spannung wieder eingeschaltet, so daß der Punkt B' in der Kennlinie erreicht wird. Es handelt sich hierbei jedoch um einen Bereich der Kennlinie, in dem die Schaltdiode 4 kaum leitend wird, so daß die relativ geringe Ladung der Kapazität 3 nicht sicher auslesbar ist. Nach Ausschalten der Spannung wird wieder der Punkt C erreicht.

Es wird deutlich, daß der Auslesevorgang, welcher bei gespeicherter Ladung bei Punkt B', bei nicht gespeicherter Ladung bei Punkt B beginnt, in einem solchen Bereich der Kennlinie liegt, daß die Schaltdiode 4 nicht ausreichend leitend wird. Um auch kleine Ladungen sicher auslesen zu können, kann daher z.B. vorgesehen sein, das Sensorelement 2 mittels einer Zusatzbelichtung zu bestrahlen. Es würde in diesem Falle nach Anschalten der Spannung nicht der Punkt B bzw. B' erreicht werden, sondern der Punkt A bzw. A'. Es kann dann ein Auslesevorgang stattfinden, im Verlaufe dessen in der Kennlinie ausgehend vom Punkt A bzw. A' der Punkt B erreicht wird. Ein Ausschalten der Spannung führt dann wiederum zu Punkt C. Die anschließend sehr viel größere Ladungsmenge, die auf die Kapazität 3 aufgebracht wird, führt dann nach dem Einschalten der Spannung wieder zu Punkt A, so daß wiederum ein einwandfreier Auslesevorgang möglich ist.

Bezüglich der in dem Auslesevorgang abfließenden Ladungsmenge ist jedoch zu berücksichtigen, daß ein großer Teil der Ladungsmenge auf die Zusatzbestrahlung zurückgeht. Daher ist diese Ladungsmenge von der gemessenen zu subtrahieren, so daß im Ergebnis die durch das Sensorelement 2 auf die Kapazität 3 aufgebrachte Ladungsmenge übrigbleibt.

Eine weitere erfindungsgemäße Möglichkeit besteht darin, in in der Figur nicht dargestellter Weise in die Signalleitung 6 oder die Ausleseleitung 5 einen konstanten Gleichstrom einzukoppeln, welcher in Sperrichtung der Photodiode 2 fließt. Auch in diesem Fall wird damit erreicht, daß der Auslesevorgang in einem solchen Punkt der Kennlinie beginnt, in dem die Schaltdiode sicher leitend ist; es kann sich dabei beispielsweise wiederum um den Punkt A der Kennlinie handeln. Bezüglich der Auswertung der während des Auslesevorganges abfließenden Ladungsmenge gilt das gleiche wie für den Fall der zusätzlichen Bestrahlung des Sensorelementes.

Eine in Fig. 3 dargestellte Anordnung weist einen licht-oder röntgenstrahlenempfindlichen Sensor 7 auf, der bezüglich des Sensors 2, der Kapazität 3, der Schaltdiode 4, der Ausleseleitung 5 und der Signalleitung 6 in gleicher Weise wie der in Fig. 1 dargestellte Sensor aufgebaut ist. Der Sensor 7 gemäß Fig. 3 weist jedoch eine zusätzliche Schaltdiode 8 auf, welche zu der Schaltdiode 4 antiparallel geschaltet ist.

Die Schaltdiode 8 kann entweder dazu eingesetzt werden, die Schaltdiode 4 mit Einschalten einer an die Schaltdiode 4 angelegten Spannung in einen stärker leitenden Zustand zu überführen. Eine weitere Möglichkeit besteht darin, eine an die Schaltdiode 8 angelegte Spannung dazu zu nutzen, auch durch die Schaltdiode 8 einen Auslesevorgang durchzuführen, bei dem die abfließende Ladungsmenge gesondert ausgewertet wird. Diese beiden möglichen Funktionsweisen der Schaltung gemäß Fig. 3 werden im folgenden anhand der Kennlinie gemäß Fig. 4 näher erläutert, welche eine gemeinsame Kennlinie der beiden Schaltdioden 4 und 8 darstellt.

Im folgenden wird zunächst die erste Einsatzmöglichkeit der Schaltung gemäß Fig. 3 beschrieben, bei der die Schaltdiode 8 lediglich dazu dient, den über die Schaltdiode 4 vorgenommenen Auslesevorgang in einem möglichst günstigen Bereich der Kennlinie der Schaltdiode 4 einzuleiten.

Die folgende Erläuterung eines solchen Auslesevorganges bzw. dessen Vorbereitung wird anhand der in der Kennlinie gemäß Fig. 4 eingetragenen Punkte A bis F näher erläutert. Die mit einer Strichmarkierung versehenen Punkte werden in den Fällen erreicht, in denen mittels des Sensorelementes 2 eine Ladung auf die Kapazität 3 aufgebracht wurde.

Bei dem im folgenden beschriebenen Ablauf handelt es sich um einen geschlossenen Vorgang. Die Beschreibung wird begonnen bei Punkt F. Bei Aufbringen einer Ladung auf die Kapazität 3 wird der Punkt F' erreicht. Es wird nun eine Spannung eingeschaltet, die die Schaltdiode 4 in ihren leitenden Zustand überführt. Mit Erreichen des Punktes A, bzw. A' bei auf die Kapazität 3 aufgebrachter Ladung, wird die Schaltdiode 4 leitend. Es wird nunmehr der Punkt B in der Kennlinie erreicht. Die der Schaltdiode 4 zugeordnete Spannung wird nunmehr abgeschaltet, so daß in der Kennlinie Punkt C erreicht. wird. Es wird nun eine weitere Spannung, die die Schaltdiode 8 in ihren leitenden Zustand überführt und die gegenüber der der Schaltdiode 4 zugeordneten Spannung gleiche Größe, jedoch umgekehrte Polarität aufweist, eingeschaltet. Damit wird in der Kennlinie der Punkt D erreicht. Die Schaltdiode 8 ist nunmehr leitend, so daß Ladung abfließt und in der Kennlinie der Punkt E erreicht wird. Nach Ausschalten der der Schaltdiode 8 zugeordneten Spannung wird in der Kennlinie wieder der Punkt F erreicht.

Zur Messung der auf die Kapazität 3 aufgebrachten Ladung ist es vorteilhaft, nicht nur diejenige Ladungsmenge zu messen, welche während des leitenden Zustandes der Schaltdiode 4 abfließt, sondern vielmehr auch die Ladungsmenge, welche während des leitenden Zustandes der Schaltdiode 8 abfließt. Werden diese beiden Ladungsmengen nämlich aufintegriert, so braucht von dem so erhaltenen Meßsignal kein konstanter Wert mehr abgezogen zu werden; es handelt sich vielmehr direkt um das gewünschte Meßsignal, welches die mittels der Photodiode 2 auf die Kapazität 3 aufgebrachte Ladungsmenge angibt.

Bei dieser Einsatzvariante der Anordnung gemäß Fig. 3 ist es also so, daß für jeden gewünschten Meßwert der oben beschriebene Zyklus mit den beiden Spannungen entgegengesetzter Polarität einmal durchlaufen wird. Die dabei erhaltenen Signale werden aufintegriert und stellen direkt das gewünschte Meßsignal dar.

In einer zweiten Einsatzvariante der Anordnung gemäß Fig. 3 besteht jedoch auch die Möglichkeit, die durch die Schaltdiode 4 bzw. durch die Schaltdiode 8 abfließenden Ladungsmengen einzeln auszuwerten. Es wird dann also für jedes gewünschte Meßsignal nur eine Spannung eingekoppelt und die dann abfließende Ladungsmenge gemessen. Anschließend wird diese Spannung wieder abgeschaltet. Für das nächste Meßsignal wird dann eine Spannung entgegengesetzter Polarität erzeugt, wiederum die dabei abfließende Ladungsmenge gemessen und anschließend die Spannung wieder abgeschaltet, u.s.w. In diesem Falle ist eine Aufintegration nicht mehr möglich. Es muß vielmehr das dem eigentlichen Meßsignal überlagerte Zusatzsignal, das jeweils durch die Spannungen verschiedener Polarität erzeugt wird, rechnerisch korrigiert werden. Bei dieser Variante entsteht also ein erhöhter rechnerischer Aufwand. Gegenüber der ersten Einsatzvariante besteht jedoch der Vorteil, daß für jeden Meßwert nur eine Spannung vorübergehend eingekoppelt werden muß.

## Patentansprüche

1. Anordnung zum Auslesen eines licht- oder röntgenstrahlenempfindlichen Sensors (1,7), welcher als strahlenempfindliches Sensorelement eine Photodiode (2) mit einer Kapazität (3) aufweist, mit einer Schaltdiode (4) zum Auslesen der Ladung auf der Kapazität und mit einer Schaltung (6, 12, 13) zum Erzeugen eines Potentialsprungs, welcher beim Auslesen der Ladung die Schaltdiode (4) vorübergehend in ihren leitenden Zustand überführt, gekennzeichnet durch Mittel (11, 14) zum Erzeugen eines zusätzlich eingekoppelten Signals, welche Mittel so ausgebildet sind, daß auf die der Photodiode zugeordnete Kapazität eine zusätzliche Ladung aufgebracht wird, derart daß die Schaltdiode (4) bei Einschalten des Potentialsprungs in einen stärker leitenden Zustand überführt wird als ohne das Signal, so daß während des Auslesens eine größere Ladungsmenge abfließt.

2. Anordnung nach Anspruch 1,
dadurch gekennzeichnet, daß als zusätzlich eingekoppeltes Signal ein konstanter Gleichstrom vorgesehen ist, welcher in Sperrichtung der Photodiode (2) fließt.

3. Anordnung nach Anspruch 1,
dadurch gekennzeichnet, daß das zusätzlich eingekoppelte Signal mittels einer konstanten Zusatzbestrahlung des Sensorelementes (2) erzeugt wird.

4. Anordnung nach Anspruch 1,
dadurch gekennzeichnet, daß zwischen zwei Auslesezyklen der ersten Schaltdiode (4) eine weitere Spannung eingekoppelt und anschließend abgeschaltet wird, welche in Relation zu der für den Auslesevorgang der ersten Schaltdiode (4) vorgesehenen Spannung umgekehrte Polarität aufweist und welche eine zweite Schaltdiode (8), die zur ersten Schaltdiode (4) antiparallel geschaltet ist, vorübergehend in ihren leitenden Zustand überführt.

5. Anordnung nach Anspruch 4,
dadurch gekennzeichnet, daß die Spannungen verschiedener Polarität die gleiche Größe aufweisen und daß zur Ermittlung jedes Meßwertes der Strahlungsmenge die über die erste (4) und über die zweite (8) Schaltdiode nach Anlegung der jeweils zugeordneten Spannung abfließenden Ladungsmengen aufintegriert werden.

6. Anordnung nach Anspruch 4,
dadurch gekennzeichnet, daß zur Ermittlung jedes Meßwertes der Strahlungsmenge nur genau eine Spannung eingekoppelt und anschließend abgeschaltet wird, daß nur die über die in Folge dieser Spannung in ihren leitenden Zustand überführte Schaltdiode (4 oder 8) abfließende Ladungsmenge gemessen wird und daß zur Ermittlung des nächsten Meßwertes eine Spannung umgekehrter Polarität eingekoppelt und anschließend abgeschaltet wird.

7. Anordnung nach einem der Ansprüche 1 bis 6,
dadurch gekennzeichnet, daß die Photodiode (2) mit einer röntgenstrahlenempfindlichen Phosphorschicht versehen ist.

8. Anordnung nach einem der Ansprüche 1 bis 7,
dadurch gekennzeichnet, daß zur Photodiode (2) eine zusätzliche Kapazität parallelgeschaltet ist.

9. Anordnung nach einem der Ansprüche 1 bis 8,
dadurch gekennzeichnet, daß mehrere Sensoren (1, 7) in Form einer oder mehrerer Zeilen angeordnet sind.

## Claims

1. An arrangement for reading out a sensor (1, 7) which is sensitive to light or X-ray and which comprises a radiation-sensitive sensor element in the form of a photodiode (2) with a capacitance (3), a switching diode (4) for reading out the charge across the capacitance, and a circuit (6, 12, 13) for generating a potential jump which temporarily sets the switching diode (4) to its conducting state when the charge is read out,
characterized in that it comprises means (11, 14) for producing an additionally coupled-in signal, which means are constructed so that an additional charge is applied to the capacitance associated with the photodiode so that upon application of the potential jump the switching diode is set to a state which is more conductive than in the absence of the signal, with the result that a larger quantity of charge flows off during reading out.

2. An arrangement as claimed in Claim 1, characterized in that as an additionally coupled-in signal there is provided a constant direct current, which flows in the reverse direction of the photodiode (2).

3. An arrangement as claimed in Claim 1, characterized in that the additionally coupled-in signal is produced by constant additional irradiation of the sensor element (2).

4. An arrangement as claimed in Claim 1, characterized in that between two read-out cycles of the first switching diode (4) a further voltage is coupled in and subsequently switched off, which further voltage has, in relation to the voltage provided for the reading out of the first switching diode (4), a reverse polarity and sets a second switching diode (8), being connected anti-parallel to the first switching diode (4), temporarily in its conductive state.

5. An arrangement as claimed in Claim 4, characterized in that the voltages of different polarity have the same value and that for determining each measurement value of the quantity of radiation the quantities of charge flowing away via the first switching diode (4) and via the second switching diode (8) after application of the respective associated voltage are integrated.

6. An arrangement as claimed in Claim 4, characterized in that for determining each measurement value of the quantity of radiation only one voltage is accurately coupled in and subsequently switched off, that only the quantity of charge flowing away via the switching diode (4 or 8) set to its conductive state by this voltage is measured, and that for determining the next measurement value a voltage of reverse polarity is coupled in and subsequently switched off.

7. An arrangement as claimed in any one of Claims 1 to 6, characterized in that the photodiode (2) is provided with a phosphor layer sensitive to X-rays.

8. An arrangement as claimed in any one of Claims 1 to 7, characterized in that an additional capacitance is connected parallel to the photodiode (2).

9. An arrangement as claimed in any one of Claims 1 to 8, characterized in that several sensors (1, 7) are arranged in the form of one or more rows.

## Revendications

1. Dispositif pour la lecture d'un détecteur sensible à la lumière ou aux rayons X (1, 7), qui comprend, comme élément détecteur sensible au rayonnement, une photodiode (2) ayant une capacité (3), avec une diode de commutation (4) pour la lecture de la charge de la capacité et un circuit (6, 12, 13) pour la production d'un saut de potentiel qui, lors de la lecture de la charge, amène la diode de commutation (4) temporairement dans son état conducteur, caractérisé par des moyens (11, 14) pour la production d'un signal injecté supplémentaire, lesquels moyens sont conçus de façon qu'une charge supplémentaire soit appliquée à la capacité afférente à la photodiode de manière que la diode de commutation (4), lors de l'enclenchement du saut de potentiel, soit amenée dans un état plus fortement conducteur qu'en l'absence de signal afin qu'une plus grande quantité de charge s'écoule pendant la lecture.

2. Dispositif suivant la revendication 1, caractérisé en ce qu'il est prévu, comme signal injecté en supplément, un courant continu constant qui s'écoule dans le sens de non-conduction de la photodiode (2).

3. Dispositif suivant la revendication 1, caractérisé en ce que le signal injecté en supplément est produit au moyen d'une exposition supplémentaire constante de l'élément détecteur (2).

4. Dispositif suivant la revendication 1, caractérisé en ce qu'entre deux cycles de lecture de la première diode de commutation (4), est injectée puis supprimée une autre tension qui présente une polarité opposée par rapport à la tension prévue pour le cycle de lecture de la première diode de commutation (4), et qui amène une deuxième diode de commutation (8) montée tête-bêche avec la diode de commutation (4), temporairement dans son état conducteur.

5. Dispositif suivant la revendication 4, caractérisé en ce que les tensions de différentes polarités ont la même grandeur et que, pour la détermination de chaque valeur de mesure de la quantité de rayonnement, les quantités de charge s'écoulant par la première diode de commutation (4) et la deuxième diode de commutation (8) après l'application de la tension respectivement afférente, sont intégrées.

6. Dispositif suivant la revendication 4, caractérisé en ce que pour la détermination de chaque valeur de mesure de la quantité de rayonnement, une seule tension est injectée et ensuite supprimée, que seule la quantité de charge s'écoulant par la diode de commutation (4 ou 8) amenée dans son état conducteur en conséquence de cette tension est mesurée et que, pour la détermination de la valeur de mesure suivante, une tension de polarité opposée est injectée et ensuite supprimée.

7. Dispositif suivant l'une quelconque des revendications 1 à 6, caractérisé en ce que la photodiode (2) est munie d'une couche phosphorescente sensible aux rayons X.

8. Dispositif suivant l'une quelconque des revendications 1 à 7, caractérisé en ce qu'une capacité supplémentaire est montée en parallèle avec la photodiode (2).

9. Dispositif suivant l'une quelconque des revendications 1 à 8, caractérisé en ce que plusieurs détecteurs (1, 7) sont montés sous la forme d'une ou plusieurs rangées.
